# EUROPEAN PATENT SPECIFICATION

(11) **EP 3 233 557 B1**
(45) Date of publication and mention of the grant of the patent: **26.12.2018**
(21) Application number: 15787728.3
(22) Date of filing: 01.10.2015
(51) Int. Cl.: B60K 26/00, F02D 11/02

(54) **HAND AND FOOT CONTROLLED GAS SYSTEM**
HAND- UND FUSSGESTEUERTES GASSYSTEM
SYSTÈME DE GAZ COMMANDÉ À LA MAIN ET AU PIED

(30) Priority: 18.12.2014 TR 201415374
(43) Date of publication of application: 25.10.2017
(73) Proprietor: TURK TRAKTOR VE ZIRAAT MAKINALARI ANONIM, 06560 Ankara (TR)
(72) Inventor: KARS, Hakan, 06560 Ankara (TR); YURTTAS, Yusuf, 06560 Ankara (TR); TEKCAN, Metin, 06560 Ankara (TR); ATAMAN, Canan, 06560 Ankara (TR); BEKAR, Eren, 06560 Ankara (TR)
(74) Representative: Inal, Aysegul Seda
(86) International application number: PCT/TR2015/050122
(87) International publication number: WO 2016/099416

(56) References cited:
- CA-A- 1 169 743
- CN-U- 203 547 930
- DE-C- 471 344
- KR-A- 20130 076 094

## Description

### Technical Field of the Invention

This invention relates to a gas system which enables gas system used in tractors be controlled by hand and foot.

### State of the Art (Prior Art)

The fuel flow to the engines of vehicles is generally controlled by a pedal which is actuated by foot. The fuel flow to the engine increases or decreases proportional to the amount of actuation applied by the user on the pedal In addition to vehicles, the tractors have a handle which is actuated by hand in order to control the fuel flow to the engine. Spirals which are provided in the continuum of foot and pedal adjust the gas flow and control fuel flow to the engine. Handle and pedal spirals are connected to the pump separately on the engine and enable the controlling of engine speed. The condition that the spirals are independent from each other may lead to differences in speed in hand and foot gas courses. Hand gas which is adjusted with the help of handle is important during the processing of the field with tractor. It is required to process the field at a fixed speed together with the equipment attached to the tractor. In addition to the difference of speed, the spiral that extends from the handle may break after deformation over time.

In the patent application No. CA 1169743A1, a gas system which could be controlled by handle and pedal is explained. By means of a protective sheath which is provided on the spiral in the gas system, it is aimed to avoid the deformation. Another purpose of the invention is to ensure that spirals are used individually or collectively. The disadvantage of the application in question is that the spirals affect the operation of one another. When the user transmits actuation to the handle or pedal, other elements are affected from this movement. Thus, differences in speed occur in adjustments between elements.

In the utility model application with publication No. CN203547930U, a gas system is disclosed wherein both gas pedal and handle controls are connected to the same spiral. The spiral to which the pedal is connected is extended and its end is connected to a transmission mechanism. The transmission mechanism is connected to the spiral that is received from the handle. When an actuation is transmitted from the handle, the mechanism takes the movement and transmits it to the other gas spiral. By this means, the gas system is aimed to be controlled from a single spiral by means of transmission elements. This system has a structure which could decrease deformation that could occur on the spirals. However, the adjustment of motor speed and prevention of speed losses will not be taken under control.

### Brief Description And The Object Of The Invention

The present invention relates to a tractor gas system in order to abolish the disadvantages mentioned above and bring new advantages to the relevant technical field.

The purpose of the invention is to demonstrate a tractor gas system which abolishes the disharmony of the course between the handle and the pedal.

Another purpose of the invention is to demonstrate a tractor gas system which enables to control the motor gas pump with a single spiral.

Another purpose of the invention is to disclose a tractor gas system which prevents the deformations that occur on the spiral coming from the handle.

In order to fulfill all of the purposes mentioned above which will be clarified with the following detailed explanations, the present invention relates to a tractor gas system which includes a pedal assembly comprising; a body; a handle provided in a movable manner on the body; a handle assembly which has a handle spiral that is connected to the handle and transmits the movement it receives from the handle, a pedal, a connection socket provided on the pedal, a pressing end which is provided on the pedal and which enables movement of the pedal on the connection socket axis with the force applied thereon. The characteristics of the tractor gas system in question comprise a transmission mechanism which has the following so as to contact the tractor gas system to a gas spiral in order to integrate the handle assembly and pedal assembly with each other;
- A carrier body which has a pedal extension on which the connection socket and a group extension is coupled,
- A gas link which is provided on the group extension that is in contact with gas spiral,
- A mechanism end which is provided on the pedal so as to contact to the gas link
- A puller link which is in contact with handle spiral and which is provided so as to contact with the gas link on group extension.

A preferred embodiment of the invention is that the pedal extension and group extension extend on opposite directions from each other on the carrier body. By this means, the handle assembly and pedal assembly are located at opposite areas of the carrier body.

Another preferred embodiment of the invention includes a pin which is provided so as to contact with the gas link on the mechanism end.

Another preferred embodiment of the invention is that the mechanism end is located on the connection socket. By this means, the movement which is received by the pedal is transferred to the mechanism end at the same rate.

Another preferred embodiment of the invention contains a groove which corresponds to the pin on the gas link.

Another preferred embodiment of the invention includes a spiral pin which is provided on the gas link so as to ensure contact between gas spiral and gas link. By this means, the drive to gas spiral is transmitted from a single point on the transmission mechanism.

Another preferred embodiment of the invention includes an alignment extension which is provided so as to contact with the gas link on the traction link.

Another preferred embodiment of the invention is that the support extension is located on the end part of puller link so as to be beside the groove part when in contact. By this means, the pin and support extension, contact the gas link through a single point.

Another preferred embodiment of the invention includes a chamber which is provided on the puller link.

Another preferred embodiment of the invention includes a connection chamber in which handle spiral is located and which assists in contacting the handle spiral with the puller link. Another preferred embodiment of the invention contains a nut which is in contact with the handle spiral which assists in protecting its location in the connection chamber.

Another preferred embodiment of the invention contains a plural of washers provided between the carrier body, gas link and puller link on the group extension. Thus a certain distance is provided between the elements mentioned. In addition to this, the friction that could occur during the movement of the elements in question will be prevented.

Another preferred embodiment of the invention includes a stopper which is provided on the end part of group extension. By this means, it is ensured that elements located on the group extension independent from one another protect their position on the group extension.

### Description of the Figures Illustrating the Invention

Figure 1 is a dismounted appearance of the tractor system.
Figure 2 is a stable view of the pedal.
Figure 3 is a perspective view of the pedal when the pedal has been pressed on.
Figure 4 is a perspective view of the pedal where it has been actuated by a handle.
Figure 5 is a profile view of the pedal where it has been actuated by a handle.

### Description of the Elements/ Components/ Parts Forming the Invention

10 Tractor Gas System
20 Handle Assembly
   21 Body
      211 Pin
   22 Handle
      221 Connection Extension
      222 Pin
   23 Handle Spiral
      231 Handle Connection End
      232 Mechanism Connection End
30 Pedal Assembly
   31 Pedal
      311 Connection Socket
   32 Pressing End
   33 Mechanism End
      331 Pin
      332 Spring Socket
   34 Spring
40 Transmission Mechanism
   41 Carrier Body
      411 Pedal Extension
      412 Group Extension
   42 Gas Link
      421 Spiral Pin
      422 Groove
   43 Extrusion Link
      431 Align
      432 Reservoir Socket
   44 Connection Reservoir
   45 Nut
   46 Washer
   47 Stopper
50 Gas Spiral
   51 Mechanism End
   52 Gas Piston End
A Opening
D Rotating Point

### Detailed Description Of The Invention

In this detailed explanation, the innovation which is the subject of the invention is explained with examples which are for the purposes of better understanding of the subject and which shall not constitute any restrictive effect. Accordingly, elements which comprise a tractor gas system (10) and a tractor gas system (10) itself are explained.

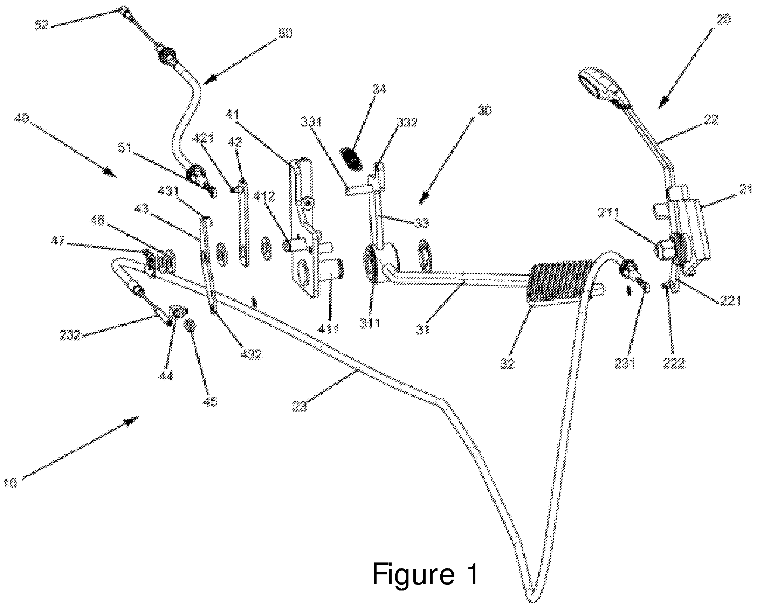

Referring to Figure 1, an exploded view of the elements constituting the tractor gas system (10) is given. The tractor gas system (10) mainly comprises the following; a handle assembly (20); a pedal assembly (30); a transmission mechanism (40) which enables integration of the handle assembly (20) with the pedal assembly (30), and a gas spiral (50) which reaches to the gas piston of the tractor that is in contact with the transmission mechanism (40).

The tractor gas system (10) has a handle assembly (20) which is located in the tractor cabin in such a way that it can be reached by the tractor user. The handle assembly (20) is contacted to the tractor frame by the help of a carrier body (21). A pin (211) is provided on the body (21). A handle (22) is contacted with the carrier body on the pin (211). The handle (22) is contacted on the pin (211) from around the middle region. The handle (22) could make an angular rotational movement on the point where the pin (211) is defined. The carrier body (21) also determines the movement limits of the handle (22). The user could perform forward - reverse, angular movement with the handle (22) within the limits mentioned. There is a connection extension (221) provided on the handle (22) and defined after the pin (211). The contact extension (221) defines a movable end. The connection extension (211) moves in the same manner with the angular movement of the handle (22). There is a pin (222) provided on the connection extension (221) in a sufficiently vertical manner. There exists a handle spiral (23) which enables contact of the handle assembly (20) with the transmission mechanism (40). The handle spiral (23) has a mechanism connection end (232) and a handle connection end (231) provided thereon. The handle connection end (231) contacts with the pin (222) and the mechanism connection end (232) contracts with the transmission mechanism (40).

The tractor gas system (10) has a pedal assembly (30) which is provided so as to be controlled by the user by foot inside the tractor cabin. The pedal assembly (30) is contacted with the tractor frame over a carrier body (41). There is a connection socket (311) on the pedal (31) which enables contact with the carrier body (41). The pedal (31) could perform an angular rotational movement on the point to which the connection socket (311) is connected. The pedal (31) has a pressing end (32) provided by the user. The user applies a force to the pressing end (32) enabling the pedal (31) to perform the rotational movement in question. There is a mechanism end (33) which is located at the continuum of the connection socket (311) over the pedal (31). The pedal assembly (30) gets into contact with the transmission mechanism (40) through mechanism end (33). A spring socket (332) provided on the mechanism end (33) as well as a pin (331) extends sufficiently vertical to the mechanism end (33). There is a spring (34) one end of which is located in the spring socket (332) in question and the other end to the tractor frame. When the force which is applied on the pedal assembly (30) is removed, the spring (34) enables that the pedal assembly (30) returns back to the former position.

The tractor gas system (10) has a transmission mechanism (40) which enables contacting the handle assembly (20) and pedal assembly (30) to the gas spiral (50) by integrating one another. The transmission mechanism has a carrier body (41) on which the elements a are located on the transmission mechanism (40). The carrier body (41) has a L shaped profile. The carrier body (41) is contacted to the tractor frame over a section of the form which it has. The vertical part defines the contract part for pedal (31) and transmission group (40) elements. The carrier body (41) has a pedal extension (411) and a group extension (412) which extends on the opposite direction to the pedal extension (411) The pedal (31) is connected with the pedal extension (411) on the connection socket (311). The transmission mechanism (40) has a gas link (42) contacted with the group extension (412). There is a spiral pin (421) and a groove (422) provided on the gas link (42). The groove (422) has a structure which is suitable with the form of the pin (331) and complements the curved structure of the pin (331) in figurative way. There is an puller link (43) which is located in the neighborhood of the gas link (42) and contacted to the gas extension (412). On the puller link (43) an align (431) is provided which extends towards the gas link (42) so as to be closed to the end part. The align (431) grasps the gas link (42) so as to abut the groove (422). On the other end of the puller link (43) there is provided a chamber housing (432). The handle spiral (23) contacts the chamber housing (432) over a connection chamber (44) in which the mechanism connection end (232) is located. A nut (45) which contracts the mechanism connection end (232) enables the mechanism connection end (232) to protect its position in the chamber (44). In this manner, the handle spiral (23) contacts with the transmission mechanism (40) over the puller link (43). A number of washers (46) are provided between the carrier body (41), has link (42) and puller link (43). The washers (46) enable that there is a certain distance between the elements and the frictions arising from the movement are decreased. The washers (46) also assist in the elements in question to be placed on the group extension (412). A stopper (47) is located at the end of the group extension (412) so as to remain outside the elements. The stopper (47) enables the elements in question to keep their position on the group extension (412). Gas link (42) and puller link (43) could perform rotational movement on group extension (412).

The transmission mechanism (40) is in contact with the has spiral. The gas spiral (50) has two ends, being one mechanism end (51) and one gas piston end (52). The gas spiral (50) is in contact with the transmission mechanism (40) by means of the contact of spiral pin (421) of mechanism end (51). The movement that comes from transmission mechanism (40) is transmitted to the end of gas piston (52). Gas piston end (52) is in contact with the gas piston (not shown in the figure) over a spring (not shown in the figure). The movement that comes from mechanism end (51) is directly transmitted to the end of gas piston (52). The power that comes from mechanism end (51) moves the gas piston end (52) if it is higher than the traction power of the spring. When the force received from the mechanism end (51) is revealed, it returns the gas piston end (52) to previous position.

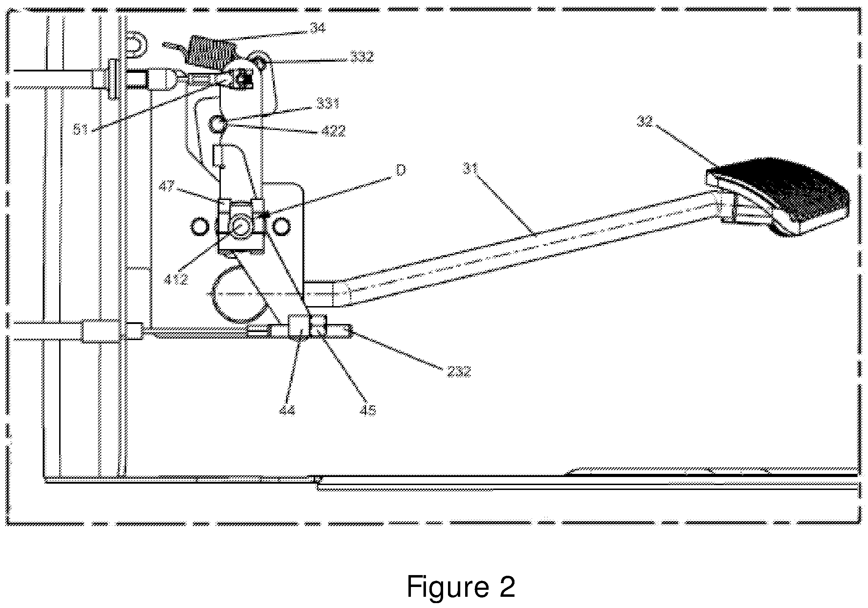

Referring to Figure 2, the profile view of the mounted status of transmission mechanism (40) is given. In the condition in question, the handle assembly (20) and the pedal assembly (30) are at the beginning condition. For that reason, the transmission mechanism (40) is at stable status at the beginning condition. Elements which comprise the pedal assembly (30) and the transmission mechanism (40) are located at opposite sides of the carrier body. The pin (331) that is located on the mechanism end (33) is located inside the groove (422). By means of the contact of puller link (43) to the gas link (42) over the pin (331) of the pedal over the align (431), two different actuation sources are made in contact with the gas spiral (50) from a single point. The group extension (412) defines a rotating point (D) for the transmission mechanism (40). Similarly, the pedal extension (411) defines a rotational point for the pedal assembly (30). Both rotational points, namely the pedal extension (411) and group extension (412) are not concentric. For that reason, in order to reach to the gas link (42), the mechanism end (33) and puller link (43) do not rotate at equal amounts. The design details at mechanism end (33) and puller link (43) actuate the gas link (42) from two neighboring points, thus abolishing the differences in question. By this means, it is ensured that the dimensions of the transmission mechanism (40) are minimized and made suitable for the pedal assembly (30) and cover less space inside the cabin.

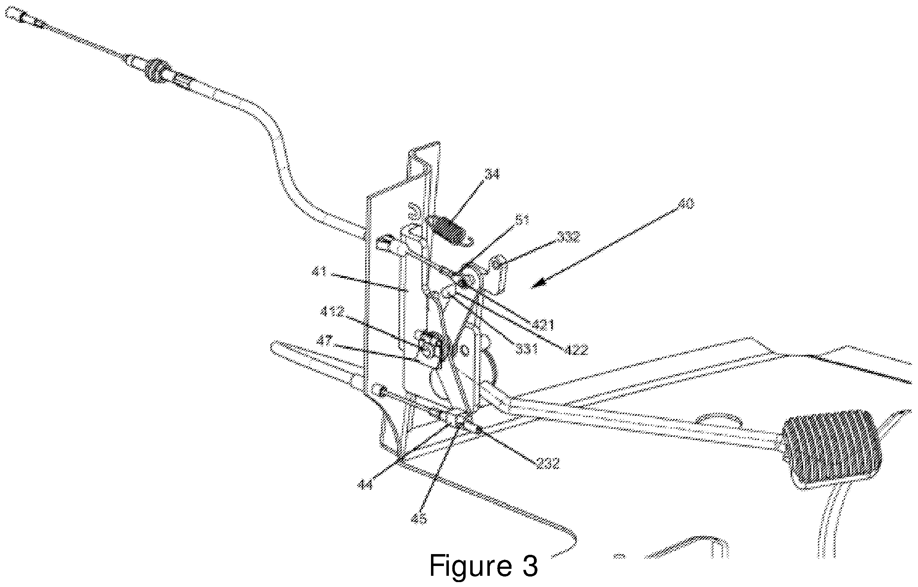

Referring to Figure 3, a perspective view is given of the condition where force is applied to a pedal assembly (30). When force is applied to user pressing end (32), the pedal (31) starts to rotate on the rotational axis defined by the pedal extension (411). Since the force applied by the user is more than the strain force of the spring (34) the mechanism end (33) starts to rotate. Since the pin (331) which is located at the mechanism end (33) rests on the groove (422), the movement that comes from the pressing end (32) is transmitted to the gas link (42). The gas link (42) performs rotational movement on the rotation point (D) defined by the group extension (412). The spiral pin (421) tracts the mechanism end (51) towards the rotational direction and enables transmission of the movement to the end of gas piston (52). As the user removes the force applied to the pressing end (32), the force applied by the spring (34) overcomes the force received at the mechanism end (33) and the pedal (31) returns to the initial position.

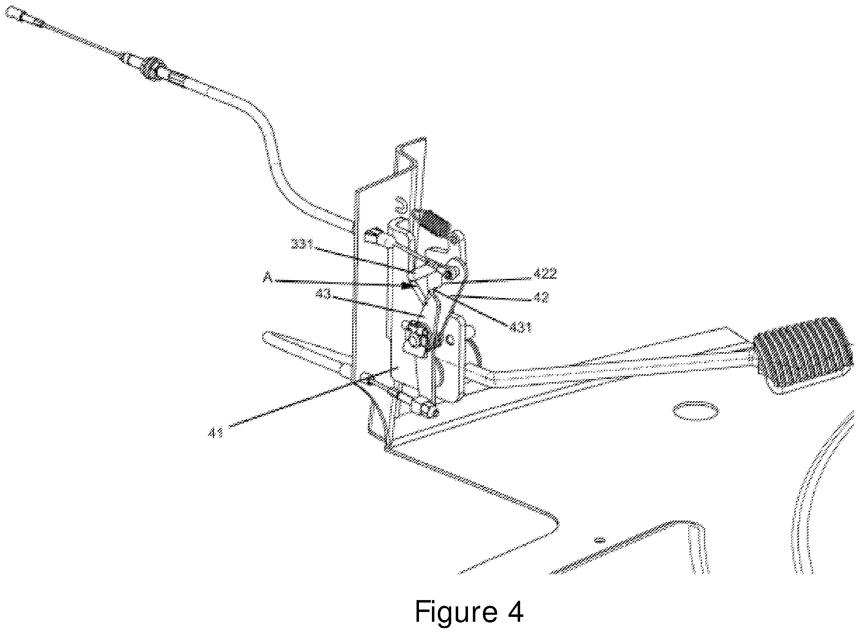

Referring to Figure 4, a perspective view is given of the condition where force is applied to a handle assembly (20). In case that the user applies a force on the handle (22), the connection extension (221) moves in the rotational direction defined by the pin (211). The pin (222) transfers the movement to handle connection end (231) and enables the mechanism connection end (232) to be drawn. The movement that is received at mechanism connection end (232) is transmitted to the puller link (43). The puller link (43) starts to rotate at rotating point (D) axis. The support extension (431) starts to move the gas link (42) on the axis of rotation point. The movement that is received at the gas link (42) is transmitted to the gas spiral. As the user brings the handle assembly (20) to the initial position, the transmission mechanism (40) starts to move in the opposite direction. The transmission mechanism (40) returns to the beginning condition. Similarly, since the force received at the mechanism end (51) is removed, the spring located on the gas piston returns the gas spiral (50) back to its beginning position.

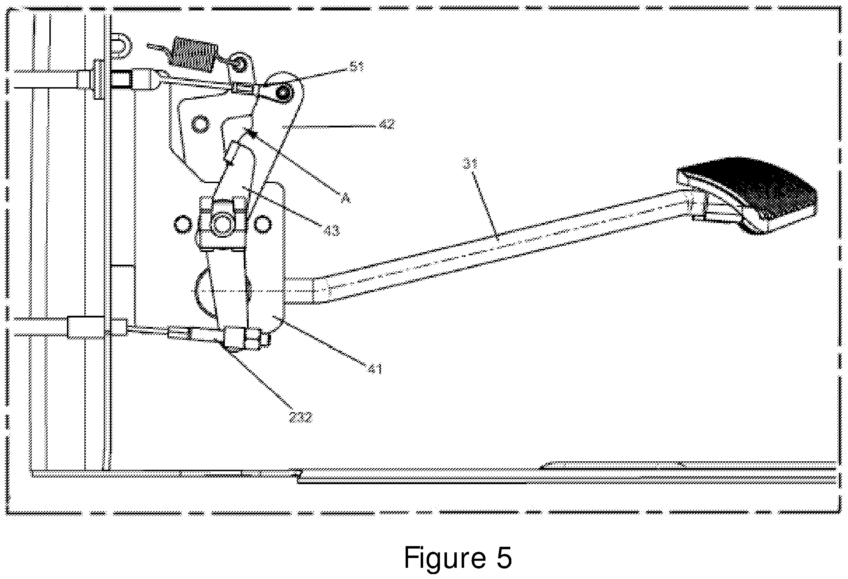

Referring to Figure 5, a profile view is given of the condition where force is applied to a handle assembly (20). When a force is applied to the handle assembly (20) or pedal assembly (30), it moves on the transmission mechanism (40) and the gas link (42) draws the gas spiral (50). A gap (A) occurs between the gas link (42) and the actuating element according to the resource where the user applies force. If the user wants to transmit actuation from the handle assembly (20) to the transmission mechanism; the puller link (43) moves the gas link (42). Meanwhile, a gap (A) occurs between the gas link (42) and the mechanism end (33). If the user wants to transmit actuation from the pedal assembly (30) to the transmission mechanism; the mechanism end (33) moves the gas link (42). Meanwhile, a gap (A) occurs between the gas link (42) and the puller link (43). This condition provides the user with the advantage of continuity during the gas setting. In case that the user shifts from one assembly to another for making gas adjustment, the user could continue to make adjustment without any loss of course. For example, when the user brings the handle assembly (20) and gas adjustment to a certain point and wants to continue gas adjustment with pedal assembly (30), first the user starts to apply force on the pedal (31). Since there is a gap (A) between the mechanism end (33) and gas link (42), the movement that comes from the pedal (31) does not directly affect the gas link (42). It is required that the mechanism end (33) should first close the gap (A) and contact the gas link (42). After the mechanism end (33) contacts the gas link (42) is moved and a movement that comes from the pedal (31) to the gas spiral is started to be transferred. A similar situation also takes place when the user wants to continue with the gas adjustment after bringing the pedal assembly (30) and gas adjustment to a certain point. The user firs starts to apply force on the handle (22). The handle (22) takes the movement and transmits to the handle spiral (23) and from there to the puller link (43). The puller link (43) for closes the gap (A) that is between the gas link (42). The puller link (43) contacts the gas link (42) and transmits the movement that is received from the handle (22) to the gas link (42).

For both conditions, the puller link (43) is located at a certain position. For that reason, a certain course is provided to the gas spiral (50). When the users want to continue with the gas adjustment with the second assembly, the actuation applied by the users to the gas link (42) is transferred starting from the current position. During the movement transferred to the gas link (42), since there is no difference between movement transmission points, no course difference occurs on the gas spiral (50). For that reason, there is no change in the gas amount transferred to the engine. By this means, there is no sudden speed loss or speed increase on the engine. Since the handle assembly (20) is not affected when force is applied to the pedal assembly (30), the handle spiral (23) is subject to continuous actuation. By this means, the life of handle spiral (23) is extended.

## Claims

1. A tractor gas system (10) comprising, a handle assembly (20) which has a handle spiral (23) that is connected to the handle (22) and transmits the movement it receives from the handle (22), comprising a body (21), a handle (22) provided in a movable manner on the body (21); a pedal assembly (30) provided on the pedal (31) comprising a pedal(31), a connection socket (311) provided on the pedal (31), a pressing end (32) which provides for the movement of pedal (31) on the connection socket (311) axis with the force applied, **characterized in that;**
it comprises a transmission mechanism (40) which enables the coupling of the handle assembly (20) and pedal assembly (30) to the gas spiral (50) by integrating them with each another, comprising;
• a carrier body (41) which has a pedal extension (411) and a group extension(412) on to which a connection socket (311) is coupled
• a gas (42) link which is provided on the group extension (412) that is in contact with gas spiral (50),
• a mechanism end (33) which is provided on the pedal (31) so as to contact the gas link (42)
• an puller link (43) which is in contact with handle spiral (23) and which is provided so as to contact the gas link (42) on the group extension (412).

2. A tractor gas system (10) according to claim 1, **characterized in that** the pedal extension (411) and group extension (412) extend on different directions from each other on the carrier body (41).

3. A tractor gas system (10) according to claim 1, **characterized in that** it comprises a pin (331) provided in order to contact the gas link (42) on the mechanism end (33).

4. A tractor gas system (10) according to claim 1 or 3, **characterized in that** the mechanism end (33) is placed on the connection socket (311).

5. A tractor gas system (10) according to claim 1 or 3, **characterized in that** it comprises a groove (422) provided so as to correspond to the pin (331) on the gas link (42).

6. A tractor gas system (10) according to claim 1, **characterized in that** it comprises a spiral pin (421) provided on the gas link (42) so as to contact the gas spiral (50) with the gas link (42).

7. A tractor gas system (10) according to claim 1, **characterized in that** it comprises a support extension (431) provided so as to contact the gas link (42) on the puller link (43).

8. A tractor gas system (10) according to claim 7, **characterized in that** the support extension (431) is placed on the end part of puller link (43) such that it will be near the groove part (422) when in contact.

9. A tractor gas system (10) according to claim 1, **characterized in that** it comprises a chamber housing (432) provided on the puller link (43).

10. A tractor gas system (10) according to claim 1, **characterized in that** it comprises a connection chamber (44) in which the handle spiral (23) is located and which assists the handle spiral (23) to contact the puller link (43).

11. A tractor gas system (10) according to claim 10, **characterized in that** it comprises a nut (45) which is in contact with the handle spiral which assists the handle spiral (23) to protect its position in the connection chamber (44).

12. A tractor gas system (10) according to claim 1, **characterized in that** it comprises a plurality of washers (46) provided between the carrier body (41), gas link (42) and puller link (43) on the group extension (412).

13. A tractor gas system (10) according to claim 1, **characterized in that** it comprises a stopper (47) provided on the end part of group extension (412).

## Patentansprüche

1. Traktor-Gassystem (10), umfassend eine Griffanordnung (20), die eine Griffspirale (23) aufweist, die mit dem Griff (22) verbunden ist und die Bewegung überträgt, die sie von dem Griff (22) empfängt, umfassend einen Körper (21), einen Griff (22), der auf bewegliche Weise am Körper (21) vorgesehen ist; eine Pedalanordnung (30), die auf dem Pedal (31) vorgesehen ist und ein Pedal (31), eine Verbindungsbuchse (311), die auf dem Pedal (31) vorgesehen ist, und ein Druckende (32) umfasst, das die Bewegung des Pedals (31) auf der Verbindungsbuchse (311) Achse mit der aufgebrachten Kraft ermöglicht, **dadurch gekennzeichnet, dass;**
es umfasst einen Übertragungsmechanismus (40), der die Kupplung der Griffanordnung (20) und der Pedalanordnung (30) mit der Gasspirale (50) durch Integration miteinander ermöglicht, umfassend;
• einen Trägerkörper (41), der eine Pedalerstreckung (411) und eine Gruppenstreckung (412) aufweist, an die eine Verbindungsbuchse (311) gekuppelt ist.
• eine Gasstrecke (42), die an der Gruppenerstreckung (412) vorgesehen ist, die in Kontakt mit der Gasspirale (50) ist,
• ein Mechanismusende (33), das am Pedal (31) vorgesehen ist, um den Gasstrecke (42) zu kontaktieren.
• ein Pullerglied (43), das mit der Griffspirale (23) in Kontakt steht und das so vorgesehen ist, dass es den Gasstrecke (42) an der Gruppenerstreckung (412) kontaktiert.

2. Traktor-Gassystem (10) nach Anspruch 1, **dadurch gekennzeichnet, dass** sich die Pedalerstreckung (411) und die Gruppenerstreckung (412) auf dem Trägerkörper (41) in unterschiedliche Richtungen voneinander erstrecken.

3. Traktor-Gassystem (10) nach Anspruch 1, **dadurch gekennzeichnet, dass** es einen Stift (331) umfasst, der vorgesehen ist, um den Gasstrecke (42) am Mechanismusende (33) zu kontaktieren.

4. Traktor-Gassystem (10) nach Anspruch 1 oder 3, **dadurch gekennzeichnet, dass** das Mechanismusende (33) auf der Verbindungsbuchse (311) platziert ist.

5. Traktor-Gassystem (10) nach Anspruch 1 oder 3, **dadurch gekennzeichnet, dass** es eine Nut (422) umfasst, die so vorgesehen ist, dass sie dem Stift (331) am Gasstrecke (42) entspricht.

6. Traktor-Gassystem (10) nach Anspruch 1, **dadurch gekennzeichnet, dass** es einen Spiralstift (421) umfasst, der an der Gasstrecke (42) vorgesehen ist, um die Gasspirale (50) mit der Gasstrecke (42) zu kontaktieren.

7. Traktor-Gassystem (10) nach Anspruch 1, **dadurch gekennzeichnet, dass** es eine Stützerstreckung (431) umfasst, die so vorgesehen ist, dass sie den Gasstrecke (42) an der Pullerglied (43) kontaktiert.

8. Traktor-Gassystem (10) nach Anspruch 7, **dadurch gekennzeichnet, dass** die Stützerstreckung (431) auf dem Endteil der Pullerglied (43) so angeordnet ist, dass sie sich bei Kontakt in der Nähe des Nutteils (422) befindet.

9. Traktor-Gassystem (10) nach Anspruch 1, **dadurch gekennzeichnet, dass** es ein Kammergehäuse (432) umfasst, das an der Pullerglied (43) vorgesehen ist.

10. Traktor-Gassystem (10) nach Anspruch 1, **dadurch gekennzeichnet, dass** es eine Verbindungskammer (44) umfasst, in der sich die Griffspirale (23) befindet und die die Griffspirale (23) beim Kontakt mit dem Pullerglied (43) unterstützt.

11. Traktor-Gassystem (10) nach Anspruch 10, **dadurch gekennzeichnet, dass** es eine Mutter (45) umfasst, die mit der Griffspirale in Kontakt steht, die die Griffspirale (23) dabei unterstützt, ihre Position in der Verbindungskammer (44) zu schützen.

12. Traktor-Gassystem (10) nach Anspruch 1, **dadurch gekennzeichnet, dass** es eine Vielzahl von Unterlegscheiben (46) umfasst, die zwischen dem Trägerkörper (41), der Gasstrecke (42) und der Pullerglied (43) an der Gruppenerstreckung (412) vorgesehen sind.

13. Traktor-Gassystem (10) nach Anspruch 1, **dadurch gekennzeichnet, dass** es einen Stopper (47) umfasst, der am Endteil der Gruppenerstreckung (412) vorgesehen ist.

## Revendications

1. Système de gaz de tracteur (10) comprenant un ensemble de poignée (20) qui a une spirale de poignée (23) qui est reliée à la poignée (22) et transmet le mouvement qu'elle reçoit de la poignée (22), comprenant un corps (21), une poignée (22) prévue d'une manière mobile sur le corps (21); un ensemble de pédale (30) prévu sur la pédale (31) comprenant une pédale (31), une douille de connexion (311) prévue sur la pédale (31), une extrémité de pression (32) qui permet le mouvement de la pédale (31) sur l'axe de la douille de connexion (311) avec la force appliquée, **caractérisé en ce que;**
il comprend un mécanisme de transmission (40) qui permet l'accouplement de l'ensemble poignée (20) et de l'ensemble pédale (30) à la spirale de gaz (50) en les intégrant entre eux, comprenant;
• un corps porteur (41) qui présente une extension de pédale (411) et une extension de groupe (412) sur laquelle une douille de connexion (311) est couplée
• une liaison de gaz (42) qui est prévue sur l'extension de groupe (412) qui est en contact avec une spirale de gaz (50),
• une extrémité de mécanisme (33) qui est prévue sur la pédale (31) de manière à entrer en contact avec la liaison de gaz (42)
• un liaison d'extraction (43) qui est en contact avec la spirale de poignée (23) et qui est prévu de manière à contacter le liaison de gaz (42) sur l'extension de groupe (412).

2. Système de gaz de tracteur (10) selon la revendication 1, **caractérisé en ce que** l'extension de pédale (411) et l'extension de groupe (412) s'étendent dans des directions différentes l'un de l'autre sur le corps porteur (41).

3. Système de gaz de tracteur (10) selon la revendication 1, **caractérisé en ce qu'**il comprend une broche (331) prévue pour venir en contact avec la liaison de gaz (42) à l'extrémité du mécanisme (33).

4. Système de gaz de tracteur (10) selon la revendication 1 ou 3, **caractérisé en ce que** l'extrémité du mécanisme (33) est placée sur la douille de connexion (311).

5. Système de gaz de tracteur (10) selon la revendication 1 ou 3, **caractérisé en ce qu'**il comporte une rainure (422) prévue de manière à correspondre à la broche (331) sur la liaison de gaz (42).

6. Système de gaz de tracteur (10) selon la revendication 1, **caractérisé en ce qu'**il comprend un goupille en spiral (421) prévue sur la liaison de gaz (42) de manière à entrer en contact avec la spirale de gaz (50) avec la liaison de gaz (42).

7. Système de gaz de tracteur (10) selon la revendication 1, **caractérisé en ce qu'**il comprend une extension de support (431) prévue pour venir en contact avec la liaison de gaz (42) sur la liaison d'extraction (43).

8. Système de gaz de tracteur (10) selon la revendication 7, **caractérisé en ce que** l'extension de support (431) est placée sur la partie d'extrémité de la liaison d'extraction (43) de telle sorte qu'elle se trouve près de la partie de rainure (422) au contact.

9. Système de gaz de tracteur (10) selon la revendication 1, **caractérisé en ce qu'**il comprend un carter de chambre (432) prévu sur la liaison d'extraction (43).

10. Système de gaz de tracteur (10) selon la revendication 1, **caractérisé en ce qu'**il comprend une chambre de raccordement (44) dans laquelle se trouve la spirale de poignée (23) et qui aide la spirale de poignée (23) à venir en contact avec la liaison d'extraction (43).

11. Système de gaz de tracteur (10) selon la revendication 10, **caractérisé en ce qu'**il comprend un écrou (45) qui est en contact avec la spirale de poignée qui assiste la spirale de poignée (23) pour protéger sa position dans la chambre de raccordement (44).

12. Système de gaz de tracteur (10) selon la revendication 1, **caractérisé en ce qu'**il comprend une pluralité de rondelles (46) prévues entre le corps porteur (41), la liaison de gaz (42) et la liaison d'extraction (43) sur l'extension de groupe (412).

13. Système de gaz de tracteur (10) selon la revendication 1, **caractérisé en ce qu'**il comprend un bouchon (47) prévu sur la partie terminale de l'extension de groupe (412).
